# EUROPEAN PATENT APPLICATION

(11) **EP 4 822 099 A1**
(43) Date of publication of application: **14.10.2026**
(21) Application number: 26169370.9
(22) Date of filing: 31.03.2026
(51) Int. Cl.: E02F 9/16, B60K 35/22, B60K 35/50, B60K 35/60, B60R 11/02, E02F 9/26, E02F 3/32

(54) **WORK MACHINE**

(30) Priority: 04.04.2025 JP 2025062612
(71) Applicant: Yanmar Holdings Co., Ltd., Osaka (JP)
(72) Inventor: DANGUCHI, Masashi, Chikugo, Fukuoka (JP); MIKI, Takahiro, Chikugo, Fukuoka (JP)
(74) Representative: Isarpatent

(57) **Abstract**

A work machine capable of preventing a display device from obstructing a forward visual field of an operator and an operation of a console part by the operator is provided.
A hydraulic excavator as the work machine includes a driving section and a display device. The driving section includes a driver seat, a side window disposed on one side in a width direction of the driving section relative to the driver seat, and a console part disposed between the driver seat and the side window in the width direction. The display device is disposed facing the side window at a position at a predetermined distance above the console part.

## Description

### TECHNICAL FIELD

The present invention relates to a work machine.

### BACKGROUND ART

A work machine including a display device has been known as prior art (see Patent Document 1, for example).

### PRIOR ART DOCUMENT

### PATENT DOCUMENT

Patent Document 1: JP2023-51224 A

### SUMMARY OF INVENTION

### TECHNICAL PROBLEM

In Patent Document 1, a display device is provided on a front side of a right side face of a cab serving as a driver cab. Therefore, the display device is positioned on the right front of a driver seat provided inside the cab. As a result, there is a risk that the display device obstructs a forward visual field of an operator sitting in the driver seat, deteriorating the forward visual field of the operator.

In a small-sized work machine for example, a console part for setting each part of the work machine may be disposed between the side face on the right side of the cab and the driver seat in a right-left direction. Since the operator operates the console part at an appropriate timing, it is desirable to dispose the display device at a position where the display device hardly becomes an obstacle when the operator operates the console part.

The present invention is implemented to solve the problem described above, and its object is to provide a work machine capable of preventing a display device from obstructing a forward visual field of an operator and an operation of a console part by the operator.

### SOLUTION TO PROBLEM

A work machine according to one aspect of the present invention includes a driving section and a display device, the driving section includes a driver seat, a side window disposed on one side in a width direction of the driving section relative to the driver seat, and a console part disposed between the driver seat and the side window in the width direction, and the display device is disposed facing the side window at a position at a predetermined distance above the console part.

### ADVANTAGEOUS EFFECTS OF INVENTION

According to the above configuration, it is possible to prevent the display device from obstructing a forward visual field of an operator and an operation of the console part by the operator.

### BRIEF DESCRIPTION OF DRAWINGS

FIG. 1 is a left side view illustrating a schematic configuration of a hydraulic excavator that is an example of a work machine according to an embodiment of the present invention;
FIG. 2 is a front view illustrating the schematic configuration of the hydraulic excavator;
FIG. 3 is a rear view illustrating the schematic configuration of the hydraulic excavator;
FIG. 4 is a right side view illustrating the schematic configuration of the hydraulic excavator;
FIG. 5 is a block diagram schematically illustrating a configuration of an obstacle detection alarm system provided in the hydraulic excavator;
FIG. 6 is a perspective view illustrating a configuration of a driving section of the hydraulic excavator as viewed from the left front;
FIG. 7 is an enlarged perspective view of a vicinity of a driver seat in the driving section as viewed from the left front;
FIG. 8 is a perspective view illustrating a configuration of a cabin of the driving section as viewed from the right front;
FIG. 9 is a left side view illustrating a disposing position of a display device of the obstacle detection alarm system;
FIG. 10 is a perspective view illustrating a holding configuration of the display device as viewed from a right rear side; and
FIG. 11 is an explanatory diagram explaining a method of mounting a holding part that holds the display device.

### DESCRIPTION OF EMBODIMENTS

An embodiment of the present invention will be described as follows with reference to the drawings.

### [1. Schematic configuration of work machine]

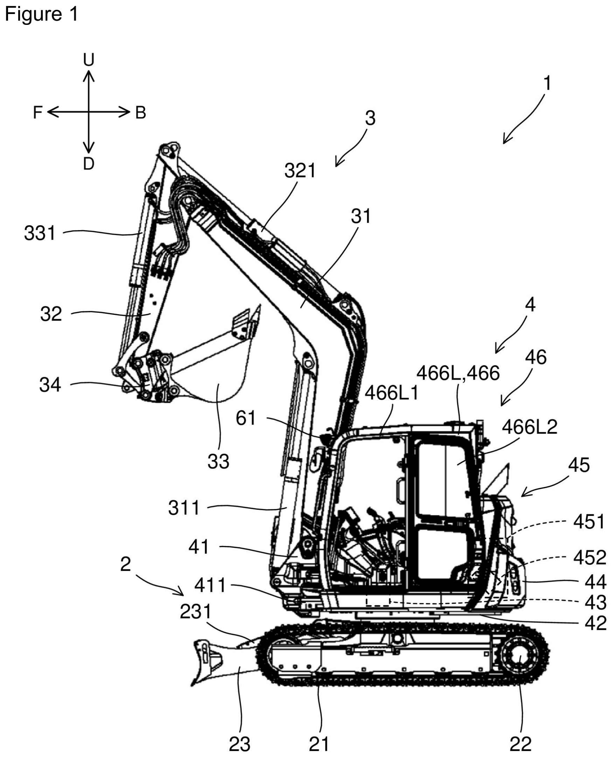

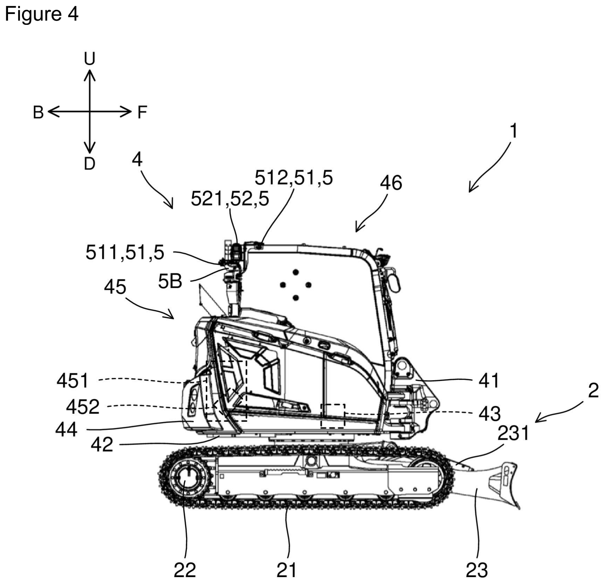

FIG. 1, FIG. 2, FIG. 3, and FIG. 4 are a left side view, a front view, a rear view, and a right side view illustrating a schematic configuration of a hydraulic excavator 1 that is an example of a work machine according to an embodiment of the present invention. In FIG. 4, illustration of work equipment 3 to be described later is omitted for convenience. The hydraulic excavator 1 includes a lower traveling body 2, the work equipment 3, and an upper revolving body 4.

Here, directions in the present embodiment are defined as follows. A direction in which an operator (a driver, a manipulator) sitting in a driver's seat 461 disposed in a driving section 46 of the upper revolving body 4 faces front is defined as "front", and a direction opposite thereto is defined as "rear". In a state where the upper revolving body 4 does not revolve (a revolving angle of 0°) relative to the lower traveling body 2, a front-rear direction of the upper revolving body 4 matches a front-rear direction of the lower traveling body 2. The drawings illustrate the hydraulic excavator 1 in the state where the upper revolving body 4 does not revolve relative to the lower traveling body 2. Further, a left side as viewed from the operator sitting in the driver's seat 461 is defined as "left", and a right side is defined as "right". Moreover, a gravity direction perpendicular to the front-rear direction and a right-left direction is defined as an up-down direction, an upstream side in the gravity direction is defined as "up", and a downstream side is defined as "down". In the drawings, as required, the front, the rear, the left, the right, the upper, and the lower are represented by symbols of "F", "B", "L", "R", "U", and "D", respectively.

The lower traveling body 2 includes a pair of right and left crawlers 21, a pair of right and left traveling motors 22, and a blade 23. The hydraulic excavator 1 can be moved forward and rearward when the right and left traveling motors 22 respectively drive the right and left crawlers 21. Each of the traveling motors 22 is formed of a hydraulic motor. The blade 23 that performs ground leveling work or the like is provided on the front side of the lower traveling body 2. The blade 23 is turned by a blade cylinder 231 formed of a hydraulic cylinder. A proximal end portion of the blade cylinder 231 is connected to the blade 23.

The work equipment 3 includes a boom 31, an arm 32, and a bucket 33. Excavation work for earth and sand can be performed by independently driving the boom 31, the arm 32, and the bucket 33.

The boom 31 has a proximal end portion turnably connected to a swing bracket 41 positioned at a front portion of the upper revolving body 4, and is turned by a boom cylinder 311. The boom cylinder 311 has a proximal end portion supported by the swing bracket 41, and can move in an extendable/contractible manner.

The arm 32 has a proximal end portion turnably connected to a distal end portion of the boom 31, and is turned by an arm cylinder 321. The arm cylinder 321 has a proximal end portion supported by the boom 31, and can move in an extendable/contractible manner.

The bucket 33 has a proximal end portion turnably connected to a distal end portion of the arm 32 via a quick hitch 34, and is turned by a bucket cylinder 331. The bucket cylinder 331 has a proximal end portion supported by the arm 32, and can move in an extendable/contractible manner. The boom cylinder 311, the arm cylinder 321, and the bucket cylinder 331 are each formed of a hydraulic cylinder.

The quick hitch 34 is configured so that an attachment such as the bucket 33 can be attached and detached. Other examples of the attachment include a breaker and a grapple. For example, crushing work for bedrock can be performed when a breaker is attached as the attachment, and work of gripping and loading lumber or the like can be performed when a grapple is attached as the attachment.

The upper revolving body 4 is positioned above the lower traveling body 2, and is provided to be revolvable via a revolving bearing (not shown) relative to the lower traveling body 2. The upper revolving body 4 includes, in addition to the swing bracket 41, a revolving frame 42, a revolving motor 43, a counterweight 44, a machine room 45, the driving section 46, and an obstacle detection alarm system 5. That is, the hydraulic excavator 1 includes the swing bracket 41, the revolving frame 42, the revolving motor 43, the counterweight 44, the machine room 45, the driving section 46, and the obstacle detection alarm system 5.

The upper revolving body 4 is revolved via the revolving bearing through drive of the revolving motor 43 disposed on the revolving frame 42. The revolving motor 43 is formed of a hydraulic motor.

The revolving frame 42 is disposed at a bottom portion of the upper revolving body 4, and functions as a base of the upper revolving body 4. More specifically, the revolving frame 42 includes a plurality of metal members joined by welding or the like. A front end portion of the revolving frame 42 supports the swing bracket 41 so as to be turnable (swingable) in the right-left direction. The swing bracket 41 is turned by a swing cylinder 411. The swing cylinder 411 is formed of a hydraulic cylinder, and can move in an extendable/contractible manner. The swing cylinder 411 is supported by a left rear portion of the upper revolving body 4 at a proximal end portion, and is supported by a left side portion of the swing bracket 41 at a distal end portion. When the swing cylinder 411 is extended/contracted, the swing bracket 41 is turned in the right-left direction relative to the revolving frame 42. Thus, the work equipment 3 turns in the right-left direction relative to the upper revolving body 4.

A rear end portion of the revolving frame 42 supports the counterweight 44. The counterweight 44 is a weight for keeping an excellent weight balance in the front-rear direction of the hydraulic excavator 1 during excavation work in particular.

The machine room 45 houses an engine 451. The engine 451 is a drive source of the hydraulic excavator 1. The engine 451 is formed of a diesel engine, however, without being limited thereto, the engine 451 may be formed of a gasoline engine for example. Note that the drive source of the hydraulic excavator 1 is not limited to the engine 451, and may be an electric motor driven by electric power, for example.

The machine room 45 houses, in addition to the engine 451, a hydraulic pump 452 to be driven by the engine 451. The hydraulic pump 452 includes a variable displacement pump and a fixed displacement pump. The hydraulic pump 452 supplies hydraulic oil (pressure oil) to the hydraulic motors and the hydraulic cylinders. The hydraulic motors are, for example, the right and left traveling motors 22 and the revolving motor 43. The hydraulic cylinders are, for example, the blade cylinder 231, the boom cylinder 311, the arm cylinder 321, the bucket cylinder 331, and the swing cylinder 411. In the present embodiment, the hydraulic motors and the hydraulic cylinders to be driven by the hydraulic oil are collectively referred to as hydraulic actuators.

Note that the hydraulic oil is supplied from the hydraulic pump 452 to the hydraulic actuator via a control valve (not shown). This control valve is a direction switching valve that controls a flow direction and a flow rate of the hydraulic oil to be supplied to the hydraulic actuator.

The hydraulic excavator 1 may be configured to use the hydraulic actuator and an electric actuator to be driven with electric power together, or may be configured to use an electric actuator instead of the hydraulic actuator. Examples of the actuator to be driven with electric power include an electric traveling motor, an electric cylinder, and an electric revolving motor.

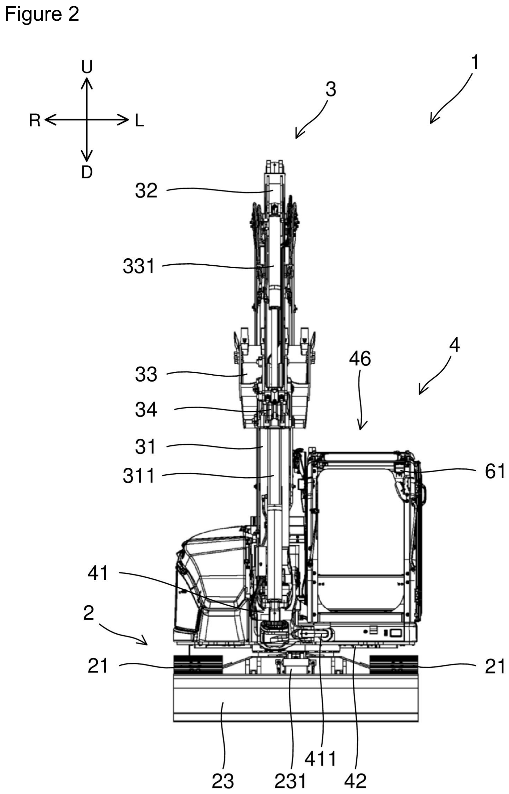

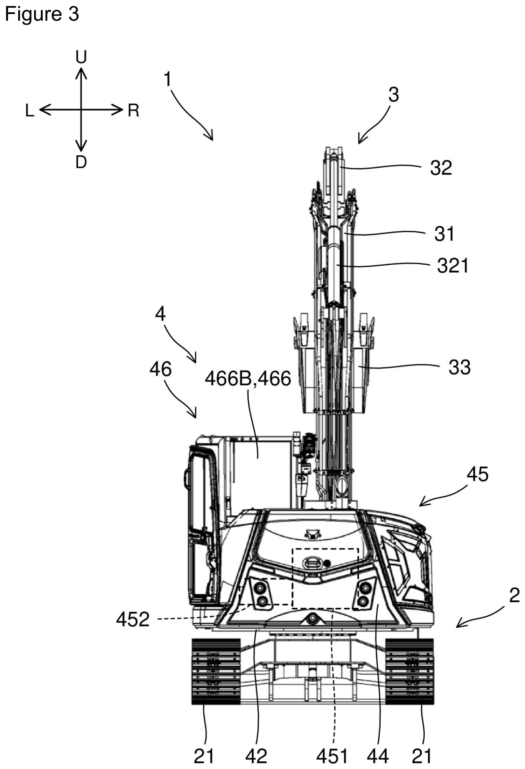

The driving section 46 is a space for the operator to get on to operate (maneuver) the hydraulic excavator 1, and is provided on a left upper portion of the upper revolving body 4. In particular, the driving section 46 is disposed in such a direction that its width direction (the right-left direction) is along the right-left direction of the upper revolving body 4 (that is, the right-left direction of the hydraulic excavator 1). In addition, the driving section 46 is disposed on the left side of the work equipment 3 positioned at a center of a turning range (swing range) in the right-left direction (see FIG. 2 and FIG. 3 in particular). Therefore, the work equipment 3 is disposed on one side (the right side in the present embodiment) in the width direction of the driving section 46 relative to the driving section 46. The configuration of the driving section 46 will be described later.

The obstacle detection alarm system 5 is a system that improves safety of the hydraulic excavator 1 (safety of various kinds of work using the hydraulic excavator 1) by suppressing contact of the hydraulic excavator 1 and obstacles positioned around (on the rear side and the right side in the present embodiment) of the hydraulic excavator 1. The obstacles include a monitoring target such as a person, an object, and an animal.

The obstacle detection alarm system 5 includes a monitoring device 51 and an alarm device 52. The alarm device 52 includes a display lamp 521. The monitoring device 51 and the display lamp 521 are mounted on a right rear side of an upper portion of the driving section 46 via a mounting bracket 5B configured by executing appropriate processing (bending, cutting, boring or the like) to a metallic planar member. Hereinafter, details of the configuration of the obstacle detection alarm system 5 will be described.

### [2. Configuration of obstacle detection alarm system]

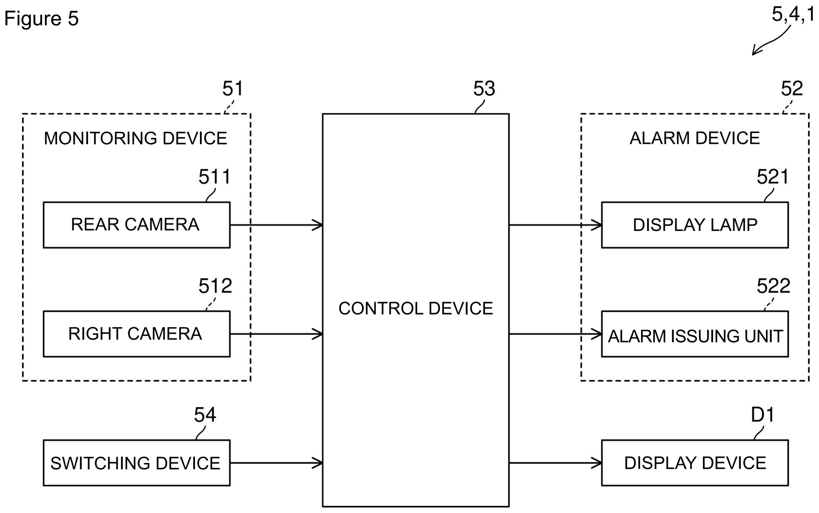

FIG. 5 is a block diagram schematically illustrating the configuration of the obstacle detection alarm system 5. The obstacle detection alarm system 5 includes, in addition to the monitoring device 51 and the alarm device 52, a control device 53, a switching device 54, and a display device D1. Similarly to the monitoring device 51 and the alarm device 52, all of the control device 53, the switching device 54, and the display device D1 are disposed on the upper revolving body 4. That is, the hydraulic excavator 1 includes the monitoring device 51, the alarm device 52, the control device 53, the switching device 54, and the display device D1.

The monitoring device 51 includes a monitoring sensor that monitors surroundings by acquiring information around the hydraulic excavator 1. In the present embodiment, the monitoring sensor is formed of a rear camera 511 that photographs the rear side of the hydraulic excavator 1 and acquires a rear image, and a right camera 512 that photographs the right side of the hydraulic excavator 1 and acquires a right side image. However, the monitoring sensor is not limited to the configuration described above. For example, the monitoring sensor may be formed of at least one of a front camera and a left camera that photograph the front and the left of the hydraulic excavator 1 respectively, instead of or in addition to at least either of the rear camera 511 and the right camera 512. In this way, the monitoring device 51 monitors the surroundings of the hydraulic excavator 1.

Note that each of the rear image photographed and acquired by the rear camera 511 and the right side image photographed and acquired by the right camera 512 is a moving image for example, however, it may be a still image acquired by photographing at a predetermined frame rate.

The rear camera 511 and the right camera 512 are mounted on the right rear side of the upper portion of the driving section 46 (see FIG. 4). More specifically, the rear camera 511 is disposed behind the right camera 512.

In the monitoring device 51, the number, an installation location, and an installation method of the monitoring sensors are not limited in particular as long as a required range can be monitored. Further, the monitoring sensor is not limited to the cameras described above, and may be various kinds of sensors. For example, the monitoring sensor may be an ultrasonic radar using ultrasonic waves, a millimeter wave radar using radio waves of a millimeter wave band, a lider (LiDAR: Light Detection And Ranging) using a laser, a stereo camera that integrally has functions of a plurality of cameras, or the like.

The monitoring device 51 outputs acquired monitoring information (photographed image information in the present embodiment) to the control device 53. The control device 53 is formed of an electronic control unit called an ECU. The control device 53 may be formed of one piece of hardware, or may be formed of a plurality of pieces of hardware that can communicate with each other. In the present embodiment, the control device 53 is formed of one piece of hardware, and is disposed at an appropriate position inside the driving section 46.

The control device 53 performs various kinds of processing (control) regarding the obstacle detection alarm system 5. The various kinds of processing include, for example, determination processing of performing known image processing to a photographed image acquired by the monitoring device 51, extracting an obstacle around the hydraulic excavator 1, and determining the presence/absence of the obstacle around the hydraulic excavator 1 based on the extraction result. Execution (valid state) and stopping (invalid state) of this determination processing are switched by the operator operating the switching device 54 electrically connected to the control device 53 for example.

In the present embodiment, the switching device 54 is formed of an alternate switch that can be pressed. For example, when the operator presses the switching device 54 in a case where the determination processing is stopped, the determination processing is executed. On the other hand, when the operator presses the switching device 54 in a case where the determination processing is being executed, the determination processing is stopped. Without being limited to the configuration described above, the switching device 54 may be formed of a momentary switch, or may be formed of a lever, for example. The switching device 54 is disposed at an appropriate position inside the driving section 46.

The display lamp 521 included in the alarm device 52 is formed of a rotating lamp for example. The display lamp 521 rotates while a lighting part is lighted when the control device 53 determines that the obstacle is present around the hydraulic excavator 1.

The alarm device 52 includes, in addition to the display lamp 521, an alarm issuing unit 522. The alarm issuing unit 522 is formed of a buzzer that outputs sound when the control device 53 determines that the obstacle is present around the hydraulic excavator 1. Note that the alarm issuing unit 522 may be formed of a sound output unit that outputs sound (electronic sound) when the control device 53 determines that the obstacle is present around the hydraulic excavator 1.

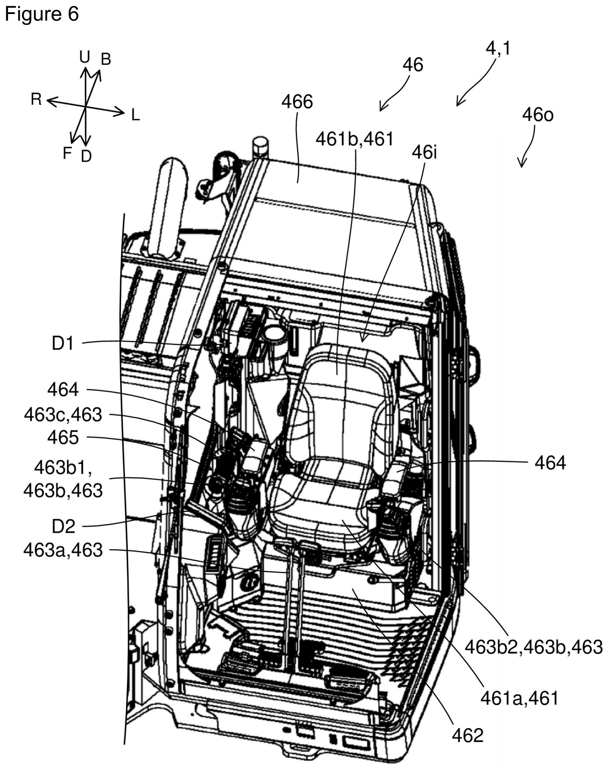

The alarm issuing unit 522 is disposed on the upper revolving body 4, similarly to the display lamp 521. For example, the alarm issuing unit 522 is disposed at a position where at least either of a collaborative worker who works in collaboration with the hydraulic excavator 1 (operator) and the operator sitting in the driver seat 461 (see FIG. 6 or the like) to be described later can easily hear the sound output from the alarm issuing unit 522. In order to achieve this disposition, the plurality of alarm issuing units 522 may be provided.

The collaborative worker is often positioned around the hydraulic excavator 1 in order to perform collaborative work with the hydraulic excavator 1. The display lamp 521 is preferably disposed at a position where the collaborative worker positioned around the hydraulic excavator 1 can easily see the display lamp 521. Accordingly, while the display lamp 521 is mounted on the right rear side of the upper portion of the driving section 46 in the present embodiment, a mounting position (disposing position) of the display lamp 521 may be different from the right rear side of the upper portion of the driving section 46. For example, the mounting position of the display lamp 521 may be an upper portion of the machine room 45 (see FIG. 1 or the like) as long as it is easy for the collaborative worker to see the display lamp 521.

The display device D1 is, for example, a liquid crystal display device or an organic EL display device. On the display device D1, the rear image of the hydraulic excavator 1 acquired by the rear camera 511, the right side image of the hydraulic excavator 1 acquired by the right camera 512, and the like are displayed. The display device D1 is disposed inside the driving section 46. Hereinafter, a disposing configuration of the display device D1 will be described.

### [3. Disposing configuration of display device]

When describing the disposing configuration of the display device D1, a configuration of the driving section 46 where the display device D1 is disposed (housed) will be described.

### [3-1. Configuration of driving section]

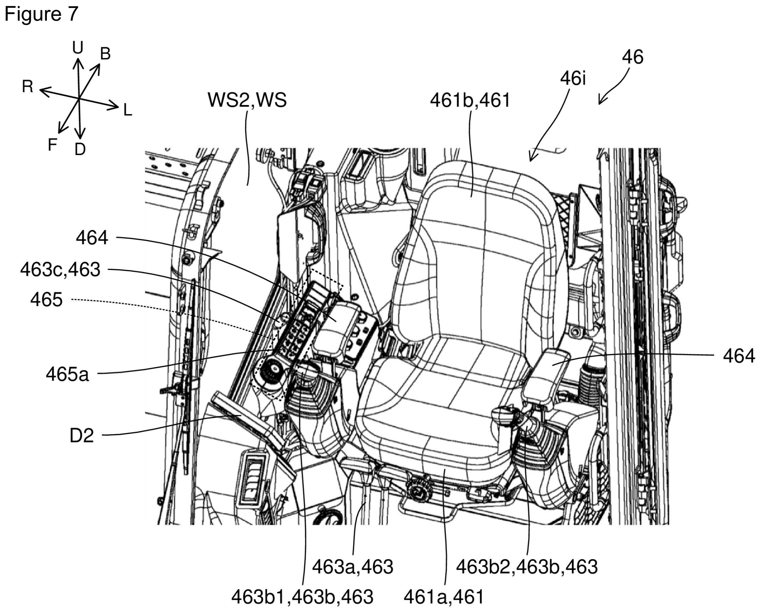

FIG. 6 is a perspective view illustrating the configuration of the driving section 46 as viewed from the left front. FIG. 7 is an enlarged perspective view illustrating a vicinity of the driver seat 461 to be described later as viewed from the left front. In FIG. 6 and FIG. 7, illustration of a part of a cabin 466 to be described later is omitted for convenience.

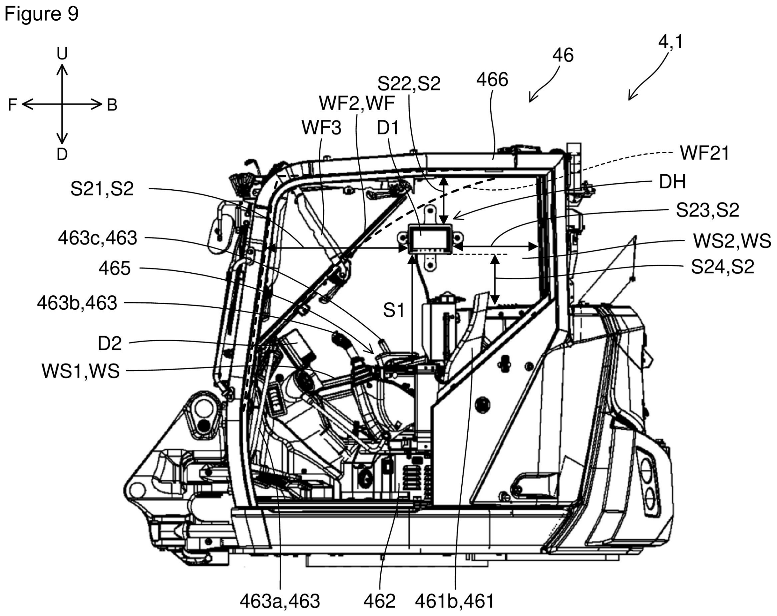

The driving section 46 is provided with the driver seat 461 for the operator who is to operate the hydraulic excavator 1 to sit in. In particular, the driver seat 461 is disposed substantially at the center of the driving section 46 (see also FIG. 9 to be described later). Specifically, a disposing position of the driver seat 461 is shifted to the rear side relative to a center portion of the driving section 46. In this way, the driving section 46 includes the driver seat 461 disposed near the center portion of the driving section 46.

The driver seat 461 includes a seat surface part 461a and a backrest part 461b. The seat surface part 461a supports buttocks and thighs of the operator sitting in the driver seat 461. The seat surface part 461a includes a seat surface frame including a plurality of metal members joined by welding or the like and extending in a horizontal direction, and a cushion member provided along the seat surface frame. This cushion member may include a single cushion material, or may be configured by combining two or more kinds of cushion materials. The seat surface frame is connected to a seat mount 462 positioned below the driver seat 461. Thus, the driver seat 461 is fixed onto the seat mount 462.

The backrest part 461b supports the back of the operator sitting in the driver seat 461. The backrest part 461b includes a backrest frame including a plurality of metal members joined by welding or the like and extending in one direction from a rear end portion of the seat surface part 461a, and another cushion member provided along the backrest frame. Similarly to the cushion member described above, this other cushion member may include a single cushion material, or may be configured by combining two or more kinds of cushion materials.

One end portion of the backrest frame is connected to a rear end portion of the seat surface frame. More specifically, the backrest frame is connected swingably in the front-rear direction relative to the seat surface frame. Thus, the backrest part 461b can be made orthogonal to the seat surface part 461a that extends in the horizontal direction, inclined forward, or inclined rearward. Being inclined forward described above means that, in the backrest part 461b, an end portion on a side opposite to the side connected to the seat surface part 461a is positioned forward relative to an end portion on the side connected to the seat surface part 461a. In addition, being inclined rearward described above means that, in the backrest part 461b, the end portion on the side opposite to the side connected to the seat surface part 461a is positioned on the rear side relative to the end portion on the side connected to the seat surface part 461a.

In this way, the driving section 46 has the driver seat 461, and the driver seat 461 includes the seat surface part 461a formed extending in the horizontal direction and the backrest part 461b that can swing in the front-rear direction of the driving section 46 relative to the seat surface part 461a.

Normally, when sitting in the driver seat 461, the operator inclines the backrest part 461b rearward appropriately (according to his/her physique, a preferred sitting posture, and the like for example). In the present embodiment, a state (posture) of the backrest part 461b when the operator is sitting in the driver seat 461 (in order to operate the hydraulic excavator 1 in particular) is referred to as a seated state. That is, the backrest part 461b is inclined rearward in the seated state. Note that FIG. 6, FIG. 7, and FIG. 9 to be described later illustrate the backrest part 461b in the seated state. On the other hand, a state where the backrest part 461b is inclined forward is the state suitable for access to the rear side of the driver seat 461 or the like.

Around the driver seat 461, another display device D2 that displays various kinds of information regarding the hydraulic excavator 1 and various kinds of operation tools 463 that drive the hydraulic actuators to operate each part of the hydraulic excavator 1 are disposed.

The other display device D2 is, for example, a liquid crystal display device or an organic EL display device, and is provided separately from the display device D1. Examples of the various kinds of information to be displayed on the other display device D2 include a rotation number of the engine 451, a remaining amount of fuel used in the engine 451, and cumulative operation time of the hydraulic excavator 1. The other display device D2 is disposed on the right front of the driver seat 461. The disposing position of the other display device D2 is not limited to the right front of the driver seat 461, and may be, for example, at the left front of the driver seat 461. In this way, the hydraulic excavator 1 includes the other display device D2 different from the display device D1, and this other display device D2 is disposed in the driving section 46.

Even when the hydraulic excavator 1 includes the other display device D2 different from the display device D1 in addition to the display device D1, it is desirable to dispose the other display device D2 at a position where the operator sitting in the driver seat 461 can easily see the other display device D2. Further, it is desirable to protect the other display device D2 from earth and sand flying from an outside of the hydraulic excavator 1. From such a viewpoint, it is desirable to dispose the other display device D2 in the driving section 46, as in the present embodiment.

The various kinds of operation tools 463 are disposed in front of the driver seat 461 and on the right and left of the driver seat 461. The operation tools 463 disposed in front of the driver seat 461 include a pair of traveling levers 463a. The pair of traveling levers 463a are disposed side by side in the right-left direction. The pair of traveling levers 463a drive the right and left traveling motors 22 to allow the hydraulic excavator 1 to travel. More specifically, the traveling levers 463a can be tilted in the front-rear direction. For example, when the operator tilts the traveling levers 463a forward, the hydraulic excavator 1 can be moved forward, and when the operator tilts the traveling levers 463a to the rear side, the hydraulic excavator 1 can be moved rearward.

The operation tools 463 disposed on the right side of the driver seat 461 include one of a pair of operation levers 463b and another operation lever 463c, and the operation tools 463 disposed on the left side of the driver seat 461 include the other one of the pair of the operation levers 463b. Hereinafter, one of the pair of the operation levers 463b may be referred to as a first operation lever 463b1, and the other one of the pair of the operation levers 463b may be referred to as a second operation lever 463b2.

The first operation lever 463b1 is disposed on the right next to the driver seat 461, and the second operation lever 463b2 is disposed on the left next to the driver seat 461. The other operation lever 463c is disposed on the right rear side of the first operation lever 463b1. Note that an armrest 464 is provided respectively on the rear side of the first operation lever 463b1 and the second operation lever 463b2. The armrest 464 is provided for the operator to place an arm when operating at least one of the first operation lever 463b1 and the second operation lever 463b2.

The pair of operation levers 463b can drive the work equipment 3 or revolve the upper revolving body 4 by driving one or more of the revolving motor 43, the boom cylinder 311, the arm cylinder 321, and the bucket cylinder 331. More specifically, the operation levers 463b can be tilted at least in the front-rear direction and the right-left direction. In addition, the operation levers 463b can be tilted to either side in the right-left direction while being tilted to either side in the front-rear direction. For example, when the operator tilts the first operation lever 463b1 forward, it is possible to contract the boom cylinder 311 and to operate the boom 31 downward. In addition, when the operator tilts the first operation lever 463b1 to the rear side, it is possible to extend the boom cylinder 311 and to operate the boom 31 upward. That is, the first operation lever 463b1 can operate the work equipment 3.

The other operation lever 463c can drive the blade 23 by driving the blade cylinder 231. More specifically, the other operation lever 463c can be tilted in the front-rear direction. For example, when the operator tilts the other operation lever 463c forward, it is possible to extend the blade cylinder 231 and to operate the blade 23 downward. In addition, when the operator tilts the other operation lever 463c to the rear side, it is possible to contract the blade cylinder 231 and to operate the blade 23 upward.

In this way, the driving section 46 has the operation tools 463 disposed on one side (the right side in the present embodiment) in the width direction of the driving section 46 relative to the driver seat 461, and the operation tools 463 include the operation lever 463b (the first operation lever 463b1 in the present embodiment) that operates the work equipment 3.

Between the first operation lever 463b1 and the other operation lever 463c in the right-left direction, a console part 465 is provided. That is, the driving section 46 includes the console part 465. The console part 465 is provided with a switch group 465a capable of setting each part of the hydraulic excavator 1. The switch group 465a includes various kinds of switches. Examples of the various kinds of switches include a work mode changeover switch, a traveling mode changeover switch, an operation switch, a headlight switch, a setting switch, and a display image changeover switch.

The work mode changeover switch can switch a work mode of the hydraulic excavator 1. Examples of the work mode of the hydraulic excavator 1 include a mode of improving work efficiency and a mode (ecological mode) of suppressing fuel consumption. The traveling mode changeover switch can switch between a low speed mode of making the hydraulic excavator 1 travel at a low speed (travel at 2 km/h or below, for example) and a high speed mode of making the hydraulic excavator 1 travel at a high speed (travel at 4 km/h or below, for example). The operation switch can operate the quick hitch 34 (see FIG. 1 or the like). Specifically, when the operation switch is operated, the quick hitch 34 is driven so that the attachment can be attached or detached.

The headlight switch can switch between lighting and lighting-off of a headlight 61 (see FIG. 1 or the like) that is mounted on the front side of the upper portion of the driving section 46 and illuminates the front of the hydraulic excavator 1. The setting switch can select choices regarding setting of the hydraulic excavator 1, which are displayed on the other display device D2. The display image changeover switch can switch an image to be displayed on the display device D1 to be the rear image of the hydraulic excavator 1, the right side image of the hydraulic excavator 1, or both of them. Note that display of both of the rear image and the right side image of the hydraulic excavator 1 may be realized by the display of a composite image generated based on the rear image and the right side image of the hydraulic excavator 1.

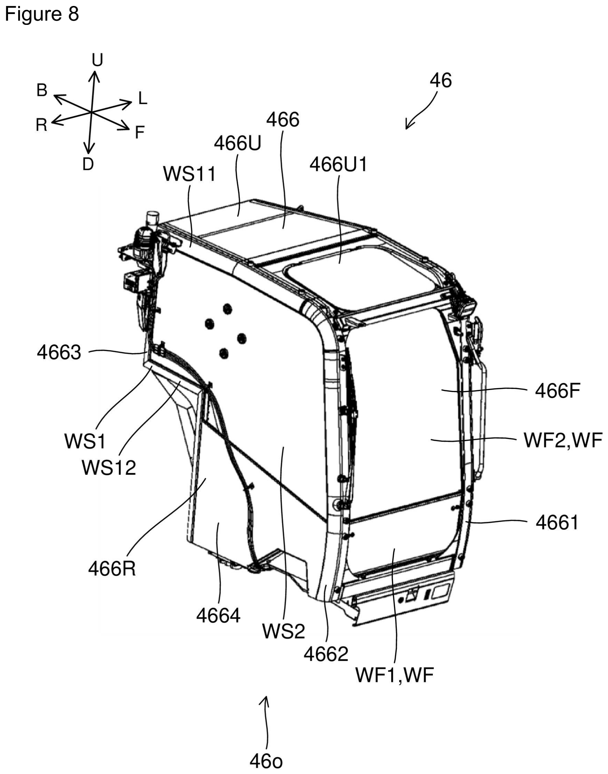

The driver seat 461 and the other display device D2, the various kinds of operation tools 463, the armrests 464, the console part 465, and the like disposed around the driver seat 461 are covered by the cabin 466. The cabin 466 is roughly box-shaped with an open bottom. More details are as follows. FIG. 8 is a perspective view illustrating a configuration of the cabin 466 as viewed from the right front. The cabin 466 includes a top wall 466U, a front wall 466F, and a right side wall 466R.

The top wall 466U extends in the horizontal direction, and is disposed on the upper side of the cabin 466. The top wall 466U configures a roof of the cabin 466, and covers the driver seat 461 from above in particular. A skylight 466U1 is provided on a front portion of the top wall 466U.

The front wall 466F extends in the up-down direction and the right-left direction, and is disposed on the front side of the cabin 466. More specifically, the front wall 466F includes a left front pillar 4661, a right front pillar 4662, and a front window WF. The left front pillar 4661 and the right front pillar 4662 each are formed of a metal columnar member that extends in the up-down direction. The left front pillar 4661 is disposed on the left front side of the cabin 466, and the right front pillar 4662 is disposed on the right front side of the cabin 466. The front window WF is provided between the left front pillar 4661 and the right front pillar 4662.

The front window WF is disposed directly in front (on the front side) of the driver seat 461 (see FIG. 6 or the like), and the front of the driving section 46 (that is, the front of the hydraulic excavator 1) is visually recognized by the operator sitting in the driver seat 461 through the front window WF. The front window WF is formed in a polygonal shape in a front view, however, without being limited thereto, the front window WF may be formed in a circular shape or may be formed in an elliptic shape, for example. In this way, the driving section 46 includes the front window WF that secures a forward visual field of the operator sitting in the driver seat 461.

The front window WF includes a fixed window WF1 provided in its lower portion, and a movable window WF2 provided in its upper portion. The fixed window WF1 is provided in order to secure the lower side of the forward visual field of the operator sitting in the driver seat 461. The fixed window WF1 extends in the right-left direction. A left end portion of the fixed window WF 1 is fixed to a lower portion of the left front pillar 4661, and a right end portion is fixed to a lower portion of the right front pillar 4662. That is, the fixed window WF1 is configured to be non-movable relative to the left front pillar 4661 and the right front pillar 4662.

The movable window WF2 is provided in order to secure a range from the center portion to the upper side in the up-down direction of the forward visual field of the operator sitting in the driver seat 461. The movable window WF2 is a movable-type window that extends in the up-down direction and the right-left direction. More specifically, the movable window WF2 is mounted near a connection portion of the top wall 466U and the front wall 466F via a link mechanism WF3 (see FIG. 9) that enables the movable window WF2 slidable in the up-down direction. The movable window WF2 can be opened when the movable window WF2 is slid upward, and the movable window WF2 can be closed when the movable window WF2 is slid downward. Note that FIG. 8 illustrates the movable window WF2 in a closed state. In this way, the movable window WF2 is configured to be opened and closed in the up-down direction. Note that a range that the movable window WF2 passes through when the movable window WF2 is slid upward or downward will be described later.

The right side wall 466R extends in the up-down direction and the front-rear direction, and is disposed on the right side of the cabin 466. More specifically, the right side wall 466R includes the right front pillar 4662, a right rear pillar 4663, a partition wall 4664, and a side window WS. The right rear pillar 4663 is formed of a metal columnar member that extends in the up-down direction, and is disposed on the right rear side of the cabin 466. In particular, the right rear pillar 4663 is disposed behind the right front pillar 4662. The partition wall 4664 is disposed between the right front pillar 4662 and the right rear pillar 4663 in the front-rear direction. The partition wall 4664 is formed of a metal planar member that extends in the up-down direction and the front-rear direction. A front end portion of the partition wall 4664 is connected to the lower portion of the right front pillar 4662.

The side window WS is the window for securing a right side visual field of the operator sitting in the driver seat 461. More specifically, the side window WS is disposed on the right side of the driver seat 461 disposed roughly at the center of the driving section 46. The operator sitting in the driver seat 461 visually recognizes the right side of the driving section 46 through the side window WS. In this way, the driving section 46 includes the side window WS disposed on one side (the right side in the present embodiment) in the width direction of the driving section 46 relative to the driver seat 461.

The side window WS includes a window frame WS1 and a transparent plate WS2. The window frame WS1 includes a portion from the center portion to an upper end portion in the up-down direction in the right front pillar 4662, the right rear pillar 4663, an upper end portion of the partition wall 4664, an upper side window frame member WS11, and a lower side window frame member WS12. The portion from the center portion to the upper end portion in the up-down direction in the right front pillar 4662 configures a front portion of the window frame WS1, and the right rear pillar 4663 configures a rear portion of the window frame WS1.

The upper side window frame member WS11 and the lower side window frame member WS12 each are formed of a metal beam-like member that extends in the front-rear direction. A front end portion of the upper side window frame member WS11 is connected to the upper end portion of the right front pillar 4662, and a rear end portion is connected to an upper end portion of the right rear pillar 4663. A front end portion of the lower side window frame member WS12 is connected to the partition wall 4664, and a rear end portion is connected to a lower end portion of the right rear pillar 4663. Therefore, the upper side window frame member WS11 forms an upper portion of the window frame WS1, and the lower side window frame member WS12 forms a lower portion of the window frame WS1 together with the upper end portion of the partition wall 4664.

The transparent plate WS2 is formed of a transparent member of a non-magnetic material formed in a plate shape. In the present embodiment, the transparent plate WS2 is a glass plate of the non-magnetic material. Note that the transparent member forming the transparent plate WS2 is not limited to glass and may be made of resin, for example. The transparent plate WS2 is formed such that its peripheral edge is along an inner peripheral edge of the window frame WS1, and is fixed to the window frame WS1 using an adhesive or the like.

Note that the console part 465 is positioned between the side window WS and the driver seat 461 in the right-left direction (see FIG. 7). That is, the console part 465 is disposed between the driver seat 461 and the side window WS in the width direction of the driving section 46. Further, between the side window WS and the driver seat 461 in the right-left direction, in addition to the console part 465, the first operation lever 463b1 and the armrest 464 disposed behind the first operation lever 463b1 are also disposed.

The cabin 466 includes, in addition, a rear wall 466B (see FIG. 3) disposed on the rear side of the cabin 466, and a left side wall 466L (see FIG. 1) disposed on the left side of the cabin 466. The left side wall 466L is provided with an entrance 466L1 for the operator to get on and off the driving section 46, and a door 466L2 that can open and close the entrance 466L1 (see FIG. 1). Accordingly, in the present embodiment, the operator gets on and off the driving section 46 on the left side of the driving section 46.

In the present embodiment, an inner side part partitioned by the top wall 466U, the front wall 466F, the right side wall 466R, the rear wall 466B, and the left side wall 466L is referred to as an inner part 46i (see FIG. 6 or the like) of the driving section 46. On the other hand, a part on the side opposite to the inner part 46i of the driving section 46 relative to the top wall 466U, the front wall 466F, the right side wall 466R, the rear wall 466B, and the left side wall 466L is referred to as an outer part 46o of the driving section 46. Accordingly, for example, the transparent plate WS2 forming the right side wall 466R is a plate of the non-magnetic material, and separates the inner part 46i and the outer part 46o of the driving section 46.

### [3-2. Disposing position of display device]

A disposing position of the display device D1 will be described based on FIG. 9. FIG. 9 is a left side view illustrating the disposing position of the display device D1. In FIG. 9, illustration of a part of the cabin 466 is omitted for a purpose of clearly indicating the disposing position of the display device D1.

The display device D1 is disposed on the right side of the inner part 46i of the driving section 46. More specifically, the display device D1 is disposed above the console part 465 disposed between the driver seat 461 and the side window WS in the right-left direction (see also FIG. 6). Specifically, the disposing position of the display device D1 is a position at a predetermined distance S1 above the console part 465. The predetermined distance S1 may be an appropriate distance. At this disposing position, the display device D1 is disposed such that its back surface (a surface opposite to the surface where the rear image of the hydraulic excavator 1 or the like is displayed) faces a left side face of the transparent plate WS2 of the side window WS. That is, the display device D1 is disposed facing the side window WS at the position at the predetermined distance S1 above the console part 465.

According to the configuration described above, the display device D1 can be disposed at the position shifted to the side (the right side in the present embodiment) from the forward visual field of the operator sitting in the driver seat 461. Thus, it is possible to prevent the display device D1 from obstructing the forward visual field of the operator. Further, by appropriately setting the predetermined distance S1, the display device D1 can be disposed at a position out of a moving range of an arm (including a hand) of the operator sitting in the driver seat 461 and operating the console part 465. Thus, it is possible to prevent the display device D1 from becoming an obstacle when the operator operates the console part 465. From the above, it is possible to prevent the display device D1 from obstructing the forward visual field of the operator and the operation of the console part 465 by the operator.

In particular, the disposing position of the display device D1 is the position at the predetermined distance S1 above the console part 465, and is the position on the inner side of the window frame WS1 forming the side window WS in a side view. That is, the display device D1 is disposed on the inner side of the window frame WS1 in the side view.

In detail, the disposing position of the display device D1 is the position at another predetermined distance S2 from the window frame WS1. For example, the other predetermined distance S2 includes a first predetermined distance S21, a second predetermined distance S22, a third predetermined distance S23, and a fourth predetermined distance S24. The first predetermined distance S21 is a (horizontal) distance between the display device D1 and the front portion (specifically the right front pillar 4662) of the window frame WS1. The second predetermined distance S22 is a (vertical) distance between the display device D1 and the upper portion (specifically the upper side window frame member WS11) of the window frame WS1. The third predetermined distance S23 is a (horizontal) distance between the display device D1 and the rear portion (specifically the right rear pillar 4663) of the window frame WS1. The fourth predetermined distance S24 is a (vertical) distance between the display device D1 and the lower portion (specifically the lower side window frame member WS12 or the partition wall 4664) of the window frame WS1. The first predetermined distance S21, the second predetermined distance S22, the third predetermined distance S23, and the fourth predetermined distance S24 may be different from each other, or may be identical to each other. In this way, the display device D1 is disposed at the other predetermined distance S2 from the window frame WS1 in the side view.

Normally, the window frame WS1 is disposed at a position to hardly obstruct the visual field of the operator in order to secure the visual field of the operator sitting in the driver seat 461 as wide as possible. That is, the window frame WS1 is often disposed at a position where it is difficult for the operator sitting in the driver seat 461 to see the window frame WS1. Accordingly, for example, when the display device D1 disposed on the window frame WS1 is moved to the inner side of the window frame WS1 in the side view, it becomes easy to visually recognize the display device D1. In this way, from a viewpoint of disposing the display device D1 so as to make it easy to see, it is desirable to dispose the display device D1 on the inner side of the window frame WS1 in the side view, in the configuration that the side window WS includes the window frame WS1, as in the present embodiment.

From a viewpoint of surely realizing the configuration that the display device D1 is disposed on the inner side of the window frame WS1 in the side view, it is desirable to dispose the display device D1 at the other predetermined distance S2 from the window frame WS1 in the side view, as in the present embodiment.

The disposing position of the display device D1 is above the disposing position of the driver seat 461. More specifically, the front portion of the display device D1 is disposed above the seat surface part 461a (see FIG. 6 or the like) of the driver seat 461 and in front of the backrest part 461b of the driver seat 461 in the side view. In addition, the rear portion of the display device D1 is disposed above the backrest part 461b in the seated state in the side view. Note that the disposing position of the display device D1 relative to the driver seat 461 is not limited to the position described above. For example, the entire display device D1 may be disposed in front of the backrest part 461b in the seated state. In this case, at least a portion of the display device D1 may be disposed in front of the seat surface part 461a. In this way, at least a portion (the front portion in the present embodiment) of the display device D1 is disposed in front of the backrest part 461b in the seated state. In addition, the display device D1 is disposed above the backrest part 461b. In particular, no matter which of the seated state and the state other than the seated state the backrest part 461b is in, that is, even when the posture of the backrest part 461b is appropriately changed, the display device D1 is disposed above the backrest part 461b.

In order to improve comfort of the operator sitting in the driver seat 461, it is desirable that the driver seat 461 supports the operator corresponding to the physique of the operator, the preferred sitting posture of the operator, or the like. From this viewpoint, it is desirable that the driver seat 461 includes the seat surface part 461a formed extending in the horizontal direction and the backrest part 461b that can swing in the front-rear direction of the driving section 46 relative to the seat surface part 461a. In addition, when the entire display device D1 is disposed behind the backrest part 461b in the seated state, the operator needs to turn to a disposing direction (an obliquely rear side, for example) of the display device D1 every time of visually recognizing the display device D1, and starts to feel troublesome to visually recognize the display device D1. Accordingly, from a viewpoint of suppressing troublesomeness of visually recognizing the display device D1 as much as possible, it is desirable that at least a portion of the display device D1 is disposed in front of the backrest part 461b in the seated state, as in the present embodiment.

The backrest part 461b only needs to support the back of the operator sitting in the driver seat 461, and a length of the backrest part 461b in a direction along the back of the operator may be suppressed to an absolute minimum in order to suppress a manufacturing cost of the backrest part 461b for example. Especially in the configuration that the driver seat 461 is provided with the backrest part 461b like that, when the display device D1 is disposed at the same position (height) as the backrest part 461b in the up-down direction, the operator needs to move a line of sight downward in order to visually recognize the display device D1. On the other hand, even in the configuration described above, when the display device D1 is disposed above the backrest part 461b, the operator does not need to move the line of sight downward in order to visually recognize the display device D1, line-of-sight movement is suppressed, and it becomes easy to visually recognize the display device D1. That is, from a viewpoint of suppressing downward movement of the line of sight and making it easy to visually recognize the display device D1, it is desirable that the display device D1 is disposed above the backrest part 461b, as in the present embodiment.

The disposing position of the display device D1 is above the disposing position of the operation tools 463 disposed on the right side of the driver seat 461. More specifically, the first operation lever 463b1 and the other operation lever 463c included in the operation tools 463 disposed on the right side of the driver seat 461 are disposed at the position where the operator sitting in the driver seat 461 can easily grip them. The position where the operator sitting in the driver seat 461 can easily grip them is, for example, in the up-down direction, roughly the same position (height) as the center portion in the up-down direction of the backrest part 461b in the seated state. That is, the first operation lever 463b1 and the other operation lever 463c are disposed, in the up-down direction, at roughly the same position as the center portion in the up-down direction of the backrest part 461b in the seated state. Accordingly, the display device D1 is positioned above the first operation lever 463b1 and the other operation lever 463c as well, in addition to the backrest part 461b (see also FIG. 6). In this way, the display device D1 is disposed above the operation tools 463 disposed on one side (the right side in the present embodiment) in the width direction of the driving section 46 relative to the driver seat 461.

The following configuration is desirable from a viewpoint of preventing the display device D1 from becoming an obstacle when the operator sitting in the driver seat 461 operates the operation tools 463 in the configuration that the driving section 46 has the operation tools 463 disposed on one side in the width direction of the driving section 46 relative to the driver seat 461. That is, it is desirable that the display device D1 is disposed above the operation tools 463, as in the present embodiment.

The following configuration is desirable from a viewpoint of making the operation of the work equipment 3 by the operator sitting in the driver seat 461 intuitively understandable in the configuration that the hydraulic excavator 1 is provided with the work equipment 3 (see FIG. 1 or the like) disposed on one side in the width direction of the driving section 46 relative to the driving section 46. That is, as illustrated in FIG. 6 and FIG. 7, it is desirable that the operation tools 463 disposed on one side in the width direction of the driving section 46 relative to the driver seat 461 include the operation lever 463b for operating the work equipment 3.

The disposing position of the display device D1 is the position out of the range that the movable window WF2 passes through when the movable window WF2 of the front window WF is slid upward or downward, that is, a movable range WF21 of the movable window WF2. More specifically, the movable window WF2 is positioned roughly along the up-down direction in a closed state (see also FIG. 8). When a lock mechanism (not shown) provided on the movable window WF2 is released and the movable window WF2 is slid upward, the movable window WF2 is gradually inclined rearward. In detail, while the movable window WF2 moves upward, one end portion positioned on the upper side of the movable window WF2 in the closed state moves to the rear side relative to the other end portion positioned on the lower side of the movable window WF2 in the closed state. That is, the movable window WF2 is inclined toward the rear side as the movable window WF2 moves upward. When the movable window WF2 is continuously slid upward, the movable window WF2 is turned to the state of being positioned along the roughly horizontal direction, that is, along the top wall 466U. When the lock mechanism is operated in this state, the movable window WF2 is held by the top wall 466U. In this state, the movable window WF2 is positioned above the driver seat 461.

Accordingly, the movable range WF21 of the movable window WF2 is a space roughly in a triangular prism shape that extends in the right-left direction, and its rear lower surface (that is, the surface facing the driver seat 461) is curved to bulge forwardly upward. The display device D1 is disposed to be shifted to a rear lower side relative to the movable range WF21 of the movable window WF2. That is, the disposing position of the display device D1 is shifted to the rear lower side relative to the movable range WF21 of the movable window WF2. In this way, the display device D1 is disposed outside the movable range WF21 of the movable window WF2.

The following configuration is desirable from a viewpoint of preventing the display device D1 from obstructing opening and closing of the movable window WF2 in the configuration that the driving section 46 has the front window WF for securing the forward visual field of the operator sitting in the driver seat 461 and the front window WF includes the movable window WF2 that can be opened and closed in the up-down direction. That is, it is desirable that the display device D1 is disposed outside the movable range WF21 of the movable window WF2 as in the present embodiment.

From a viewpoint of narrowing the movable range WF21 of the movable window WF2 that can be opened and closed in the up-down direction and miniaturizing the driving section 46 in the up-down direction, it is desirable that the movable window WF2 is inclined toward the rear side as the movable window WF2 moves upward, as in the present embodiment.

The disposing position of the display device D1 is on the upper side and the rear side of the disposing position of the other display device D2. That is, the other display device D2 is disposed in front of the display device D1.

From a viewpoint of disposing the other display device D2 at the position where the operator sitting in the driver seat 461 and facing the front can more easily see the other display device D2 than the display device D1, it is desirable that the other display device D2 is disposed in front of the display device D1, as in the present embodiment.

The display device D1 disposed at such a disposing position is held by the side window WS via a holding part DH. Hereinafter, a holding configuration of the display device D1 will be described.

### [3-3. Holding configuration of display device]

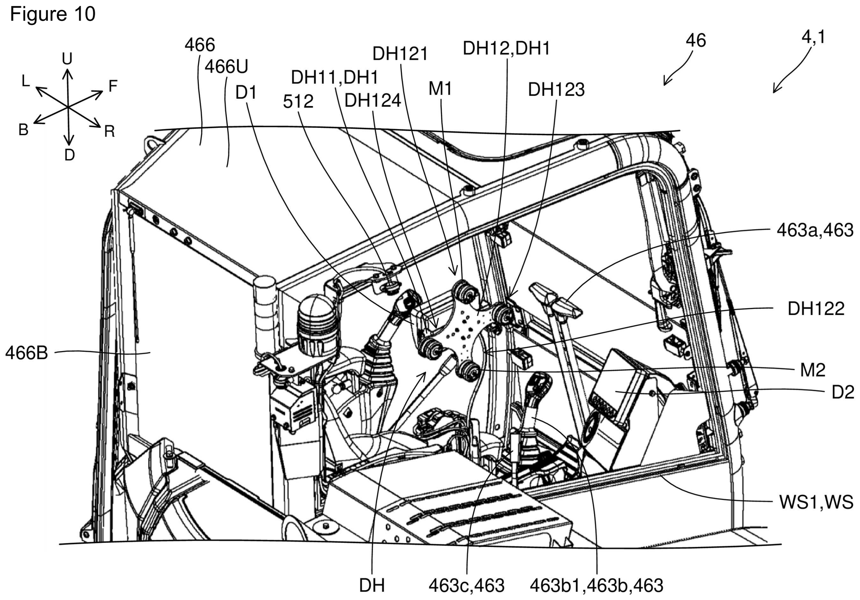

FIG. 10 is a perspective view illustrating the holding configuration of the display device D1 as viewed from the right rear side. In FIG. 10, illustration of the transparent plate WS2 of the side window WS is omitted for a purpose of clarifying the configuration of the holding part DH. The holding part DH has a holding member DH1.

The holding member DH1 is provided to hold the display device D1. More specifically, the holding member DH1 includes a first holding member DH11 and a second holding member DH12. The first holding member DH11 and the second holding member DH12 are disposed side by side in the right-left direction in the inner part 46i of the driving section 46. In particular, the first holding member DH11 is disposed on the left side of the second holding member DH12. In this way, the holding member DH1 is disposed in the inner part 46i of the driving section 46.

The first holding member DH11 and the second holding member DH12 are connected to each other. The first holding member DH11 and the second holding member DH12 are connected using a fastening member such as a bolt, however, without being limited thereto, they may be joined by welding or the like for example.

The first holding member DH11 is formed by bending a front end portion and a rear end portion of a metal planar member that extends in the front-rear direction to the left side. The display device D1 is disposed between the front end portion and the rear end portion that are bent to the left side, a front surface part of the display device D1 and the front end portion are connected, and a rear surface part of the display device D1 and the rear end portion are connected. Thus, the display device D1 is held. Note that the first holding member DH11 is not limited to the configuration described above, and may have an appropriate configuration.

The second holding member DH12 is formed of a metal planar member that extends in the up-down direction and the front-rear direction. In the second holding member DH12, a first protruding part DH121, a second protruding part DH122, a third protruding part DH123, and a fourth protruding part DH124 are formed. The first protruding part DH121 protrudes upward from the center portion of the second holding member DH12, and the second protruding part DH122 protrudes downward from the center portion of the second holding member DH12. The third protruding part DH123 protrudes forward from the center portion of the second holding member DH12, and the fourth protruding part DH124 protrudes rearward from the center portion of the second holding member DH12. Note that the second holding member DH12 is not limited to the configuration described above, and may have an appropriate configuration. In addition, a mounting angle of the second holding member DH12 may be appropriately adjusted. That is, the second holding member DH12 may be rotated by an appropriate angle (45 degrees, for example) clockwise or counterclockwise from the state illustrated in FIG. 10 in the side view and mounted.

A first magnet M1 is mounted on a distal end portion of each of the first protruding part DH121, the second protruding part DH122, the third protruding part DH123, and the fourth protruding part DH124. That is, the second holding member DH12 of the present embodiment is provided with the four first magnets M1. Each first magnet M1 is formed of a permanent magnet in a disk shape, however, without being limited thereto, the first magnet M1 may be formed in a shape other than the disk shape or may be formed of an electromagnet. In this way, the holding part DH has the first magnets M1 provided on the holding member DH1 (the second holding member DH12 in the present embodiment).

The number of the first magnets M1 is not limited to four, and may be, for example, one or plural other than four. Further, the mounting position of the first magnet M1 is not limited to the position described above, and may be an appropriate position of the holding member DH1.

The holding part DH includes a plurality of second magnets M2 in addition to the plurality of first magnets M1. The plurality of second magnets M2 are provided corresponding to the plurality of first magnets M1. More specifically, the first magnet M1 and the second magnet M2 corresponding to each other form one pair, and four pairs are provided. Each second magnet M2 is formed of a permanent magnet in the disk shape, however, without being limited thereto, the second magnet M2 may be formed in a shape other than the disk shape or may be formed of an electromagnet, similarly to the first magnet M1. The first magnet M1 and the second magnet M2 (corresponding to each other) are attracted to each other by magnetic force that each has. That is, the second magnet M2 attracts the first magnet M1.

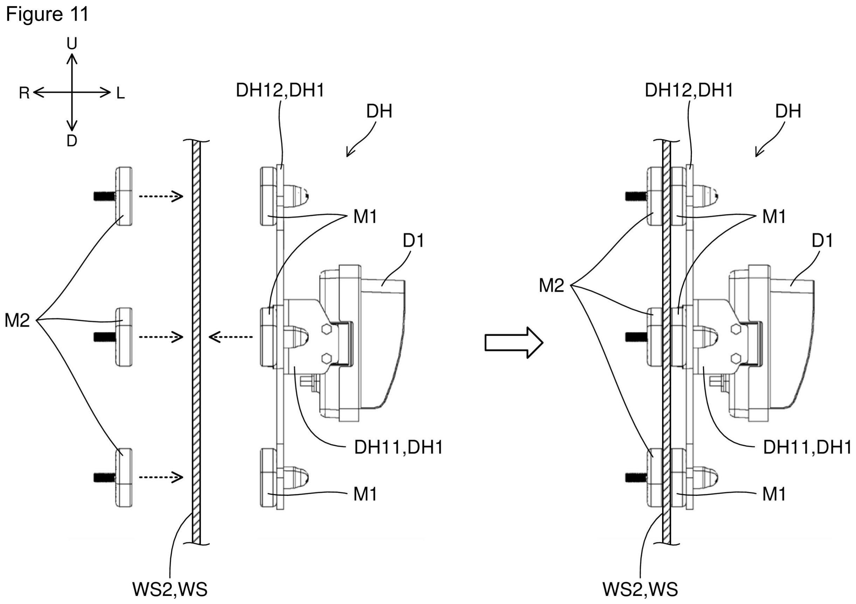

The holding part DH is mounted on the transparent plate WS2 of the side window WS. More details are as follows. FIG. 11 is an explanatory diagram explaining a method of mounting the holding part DH onto the transparent plate WS2. When mounting the holding part DH onto the transparent plate WS2, the holding member DH1 is moved from the left side to the right side of the transparent plate WS2 in a direction that each first magnet M1 faces the transparent plate WS2. Simultaneously with the movement of the holding member DH1, each second magnet M2 is moved from the right side to the left side of the transparent plate WS2 while making it face the corresponding first magnet M1. Then, the first magnet M1 and the second magnet M2 forming each pair can be disposed sandwiching the transparent plate WS2 from the right-left direction. That is, the first magnet M1 and the second magnet M2 (corresponding to each other) are disposed sandwiching the transparent plate WS2 from the width direction of the driving section 46.

Since the transparent plate WS2 is (the glass plate of) the non-magnetic material as described above, even when the transparent plate WS2 is positioned between the first magnet M1 and the second magnet M2, the first magnet M1 and the second magnet M2 attract each other by the magnetic force that each has. Thus, the holding part DH is mounted on the transparent plate WS2.

The holding member DH1 in the state of being mounted with the display device D1 is moved toward the transparent plate WS2 in the mounting method illustrated in FIG. 11, however, the display device D1 may be mounted on the holding member DH1 after the holding part DH is mounted on the transparent plate WS2. Further, the holding member DH1 and the second magnet M2 are simultaneously moved in the mounting method illustrated in FIG. 11, however, they may be moved successively. For example, the second magnet M2 may be moved after the holding member DH1 is moved, or the holding member DH1 may be moved after the second magnet M2 is moved. In this case, the holding member DH1 or the second magnet M2 that has been moved first needs to be temporarily held. In this way, the hydraulic excavator 1 includes the holding part DH that holds the display device D1 on the side window WS.

The following configuration is desirable from a viewpoint of holding the display device D1 disposed facing the side window WS at the position at the predetermined distance S1 (see FIG. 9) above the console part 465 (see FIG. 7 or the like) by a simple configuration. That is, it is desirable that the hydraulic excavator 1 includes the holding part DH that holds the display device D1 on the side window WS, as in the present embodiment.

The following configuration is desirable from a viewpoint of holding the display device D1 by the side window WS by a simple configuration by effectively utilizing the fact that the transparent plate WS2 is the non-magnetic material when the side window WS includes the transparent plate WS2 of the non-magnetic material that partitions the inner part 46i and the outer part 46o of the driving section 46. That is, it is desirable that the holding part DH has the holding member DH1 that holds the display device D1, the first magnet M1 provided in the holding member DH1, and the second magnet M2 that attracts the first magnet M1, as in the present embodiment. Then, it is desirable that the first magnet M1 and the second magnet M2 are disposed sandwiching the transparent plate WS2 from the width direction of the driving section 46.

Note that the holding part DH is not limited to the configuration described above. For example, the holding part DH may be provided with a sucker instead of the first magnet M1, or may be formed of an adhesive. Since the second magnet M2 forms a pair with the first magnet M1 as described above, in the configuration that the first magnet M1 is excluded from the holding part DH, the second magnet M2 may be also excluded in addition to the first magnet M1.

### [4. Supplements]

The present embodiment describes the case where the right side is "one side in the width direction of the driving section 46", however, it is not limited thereto. For example, the left side may be "one side in the width direction of the driving section 46". That is, the right and the left may be reversed in the disposition.

The present embodiment describes the configuration that the driving section 46 has the cabin 466, however, a canopy may be provided instead of the cabin 466.

The present embodiment describes the hydraulic excavator 1 as an example of the work machine, however, the work machine is not limited to the hydraulic excavator 1, and may be a construction machine such as a wheel loader and a mobile crane. Further, the work machine may be an agricultural machine such as a combine harvester and a tractor.

### [5. Clauses]

The hydraulic excavator 1 described in the present embodiment can be expressed as the work machine indicated in the following clauses.

A work machine of clause (1) includes
a driving section and a display device,
the driving section includes
   a driver seat,
   a side window disposed on one side in a width direction of the driving section relative to the driver seat, and
   a console part disposed between the driver seat and the side window in the width direction, and
the display device is disposed facing the side window at a position at a predetermined distance above the console part.

A work machine of clause (2) is the work machine according to clause (1), wherein the driver seat includes
a seat surface part formed extending in a horizontal direction, and
a backrest part that is swingable in a front-rear direction of the driving section relative to the seat surface part, and
at least a portion of the display device is disposed in front of the backrest part in a seated state.

A work machine of clause (3) is the work machine according to clause (2), wherein the display device is disposed above the backrest part.

A work machine of clause (4) is the work machine according to any one of clauses (1) to (3), wherein
the driving section includes an operation tool disposed on one side in the width direction relative to the driver seat, and
the display device is disposed above the operation tool.

A work machine of clause (5) is the work machine according to clause (4), including
work equipment disposed on one side in the width direction relative to the driving section, wherein
the operation tool includes an operation lever for operating the work equipment.

A work machine of clause (6) is the work machine according to any one of clauses (1) to (5), wherein
the side window includes a window frame, and
the display device is disposed on an inner side of the window frame in a side view.

A work machine of clause (7) is the work machine according to clause (6), wherein
the display device is disposed at another predetermined distance from the window frame in the side view.

A work machine of clause (8) is the work machine according to any one of clauses (1) to (7), including
a holding part that holds the display device on the side window.

A work machine of clause (9) is the work machine according to clause (8), wherein
the side window includes a transparent plate of a non-magnetic material that partitions an inner part and an outer part of the driving section,
the holding part includes
   a holding member that is disposed in the inner part and holds the display device,
   a first magnet provided on the holding member, and
   a second magnet that attracts the first magnet, and
the first magnet and the second magnet are disposed sandwiching the transparent plate from the width direction.

A work machine of clause (10) is the work machine according to any one of clauses (1) to (9), wherein
the driving section includes a front window that secures a forward visual field of an operator sitting in the driver seat,
the front window includes a movable window that is openable and closable in an up-down direction, and
the display device is disposed outside a movable range of the movable window.

A work machine of clause (11) is the work machine according to clause (10), wherein
the movable window is inclined toward a rear side of the driving section as the movable window moves upward.

A work machine of clause (12) is the work machine according to any one of clauses (1) to (11), including
another display device different from the display device, wherein
the other display device is disposed in the driving section.

A work machine of clause (13) is the work machine according to clause (12), wherein the other display device is disposed in front of the display device.

While the embodiment of the present invention has been described above, the scope of the present invention is not limited thereto. The present invention may be implemented with extensions or changes without departing from the gist of the invention.

### INDUSTRIAL APPLICABILITY

The present invention is applicable to, for example, a work machine such as a construction machine or an agricultural machine.

### REFERENCE SIGNS LIST

- 1: hydraulic excavator (work machine)
- 3: work equipment
- 46: driving section
- 46i: inner part
- 46o: outer part
- 461: driver seat
- 461a: seat surface part
- 461b: backrest part
- 463: operation tool
- 463b: operation lever
- 465: console part
- D1: display device
- D2: other display device
- DH: holding part
- DH1: holding member
- M1: first magnet
- M2: second magnet
- S1: predetermined distance
- S2: other predetermined distance
- WF: front window
- WF2: movable window
- WF21: movable range
- WS: side window
- WS1: window frame
- WS2: transparent plate

## Claims

1. A work machine comprising a driving section and a display device, wherein
the driving section includes
a driver seat,
a side window disposed on one side in a width direction of the driving section relative to the driver seat, and
a console part disposed between the driver seat and the side window in the width direction, and
the display device is disposed facing the side window at a position at a predetermined distance above the console part.

2. The work machine according to claim 1, wherein
the driver seat includes
a seat surface part formed extending in a horizontal direction and
a backrest part that is swingable in a front-rear direction of the driving section relative to the seat surface part, and
at least a portion of the display device is disposed in front of the backrest part in a seated state.

3. The work machine according to claim 2, wherein
the display device is disposed above the backrest part.

4. The work machine according to claim 1, wherein
the driving section includes an operation tool disposed on one side in the width direction relative to the driver seat, and
the display device is disposed above the operation tool.

5. The work machine according to claim 4, comprising
work equipment disposed on one side in the width direction relative to the driving section, wherein
the operation tool includes an operation lever for operating the work equipment.

6. The work machine according to claim 1, wherein
the side window includes a window frame, and
the display device is disposed on an inner side of the window frame in a side view.

7. The work machine according to claim 6, wherein
the display device is disposed at another predetermined distance from the window frame in the side view.

8. The work machine according to claim 1, comprising
a holding part that holds the display device on the side window.

9. The work machine according to claim 8, wherein
the side window includes a transparent plate of a non-magnetic material that partitions an inner part and an outer part of the driving section,
the holding part includes
a holding member that is disposed in the inner part and holds the display device,
a first magnet provided on the holding member, and
a second magnet that attracts the first magnet, and
the first magnet and the second magnet are disposed sandwiching the transparent plate from the width direction.

10. The work machine according to claim 1, wherein
the driving section includes a front window that secures a forward visual field of an operator sitting in the driver seat,
the front window includes a movable window that is openable and closable in an up-down direction, and
the display device is disposed outside a movable range of the movable window.

11. The work machine according to claim 10, wherein
the movable window is inclined toward a rear side of the driving section as the movable window moves upward.

12. The work machine according to any one of claims 1 to 11, comprising another display device different from the display device, wherein
the other display device is disposed in the driving section.

13. The work machine according to claim 12, wherein
the other display device is disposed in front of the display device.
